# EUROPEAN PATENT SPECIFICATION

(11) **EP 1 622 805 B1**
(45) Date of publication and mention of the grant of the patent: **07.11.2007**
(21) Application number: 04730143.7
(22) Date of filing: 28.04.2004
(51) Int. Cl.: B62D 1/06, F28D 15/02

(54) **A STEERING WHEEL**
LENKRAD
VOLANT

(30) Priority: 12.05.2003 GB 0310866
(43) Date of publication of application: 08.02.2006
(73) Proprietor: AUTOLIV DEVELOPMENT AB, 447 83 Vargarda (SE)
(72) Inventor: TARTE, Frédéric, F-86580 Biard (FR); LEMASSON, Pascal, F-86000 St Georges les Baillargeaux (FR)
(74) Representative: Parry, Simon James
(86) International application number: PCT/SE2004/000642
(87) International publication number: WO 2004/098979

(56) References cited:
- WO-A1-01/28842
- DE-A1- 19 935 862
- US-A- 4 640 340

## Description

The present invention relates to a steering wheel, and more particularly relates to a steering wheel for a motor vehicle such as a motor car.

In many countries, during at least the summer months of the year, the steering wheel of a car parked outdoors may become extremely hot. A hot steering wheel is difficult to hold, and it is therefore dangerous for a person to drive whilst the steering of a car is hot, because proper handling of the steering wheel will be adversely affected. A corresponding problem may be found in cold climates where it can be dangerous to drive a motor car with a very cold steering wheel.

It can take rather a long time for the temperature of a steering wheel to be changed substantially by use of the heating or air-conditioning system normally provided within a motor vehicle. It has therefore been proposed previously to provide steering wheels with electric heating wires, so that these may be used to heat a cold steering wheel. However, this type of arrangement cannot be used satisfactorily to cool a hot steering wheel resulting from the motor vehicle being parked for a long period of time in bright sunshine.

US 4,640,340 discloses a metal insert 34 within the rim of a steering wheel, on which insert a mounted Peltier element 24,28, by means of which the insert 34, and thus the rim of the steering wheel as a whole, may be electrically heated or cooled.

The present invention therefore seeks to provide an improved steering wheel.

Accordingly, the present invention provides a steering wheel having a central hub connected by at least one spoke to a rim, and means within said rim for cooling or heating a region thereof, characterised in that said means comprises at least one heat pipe the or each said heat pipe being thermally isolated from any external cooling arrangement and being configured to transfer heat from a first region of the rim to another region of the rim solely under its own function, the or each heat pipe comprising an elongate metal tube containing an elongate wick extending from one end of the tube to the other, the tube containing a volatile liquid.

Preferably the rim comprises a single heat pipe extending around substantially the entire extent of the rim.

Advantageously the heat pipe has a substantially circular configuration.

Alternatively the rim comprises two heat pipes, each said heat pipe extending around approximately half of the extent of the rim.

Preferably each said heat pipe has a substantially semi-circular configuration.

Advantageously the two heat pipes are thermally connected to one another.

Conveniently the or each heat pipe is provided with or connected to a heater.

Preferably the or each heat pipe comprises a heating element.

Advantageously the steering wheel has heat pipes located only in the rim.

So that the invention may be more readily understood, and so that further feature thereof may be appreciated, embodiments of the invention will now be described, by way of example, with reference to the accompanying drawings, in which:
FIGURE 1 is a schematic illustration showing the steering wheel of a motor vehicle being subjected to the heating effect of sunshine;
FIGURE 2 is a schematic illustration of a heat pipe for use in the present invention;
FIGURE 3 illustrates the insertion of the heat pipe of Figure 2 into a tube for forming part of the rim of a steering wheel;
FIGURE 4 illustrates a completed steering wheel in accordance with a first embodiment of the present invention;
FIGURE 5 illustrates a completed steering wheel in accordance with another embodiment of the present invention; and
FIGURE 6 is a view corresponding generally to that of Figure 4, but illustrating the steering wheel being provided with a heating element running through the rim.

It is to be appreciated that in the present invention, use is made of "heat pipes". Heat pipes have been proposed previously and take the form of elongate pipes which can be used to facilitate the rapid transfer of heat. A typical heat pipe comprises an elongate tube formed of metal such as aluminium or copper. The interior of the tube contains an elongate wick which extends from one end of the tube to the other. The wick may be mounted on the inner wall of the pipe. The pipe contains a quantity of volatile fluid such as water, acetone, ethanol or methanol. The pipe is maintained with an internal pressure which is substantially below atmospheric pressure. If one region, for example one end region, of the pipe is heated, then liquid within the pipe will vaporise within that region and will then move, in the gaseous phase, towards the other end of the pipe. As the vapour becomes cooled, the vapour will condense. The vapour will then again turn into liquid, and the liquid will be transported by gravity and/or by a wicking action provided by the wick, back towards the heated region of the pipe. It is to be appreciated that heat will be absorbed, due to the latent heat of vaporisation, at the heated region of the pipe, and heat will be emitted, due to the reclamation of the heat of vaporisation as the vapour condenses, at the point in the heat pipe at which the vapour condenses. Heat can be very quickly transported from one region of heat pipe to another with very little loss of heat during transport. Heat pipes of this type have been proposed previously and are known to the man skilled in the art.

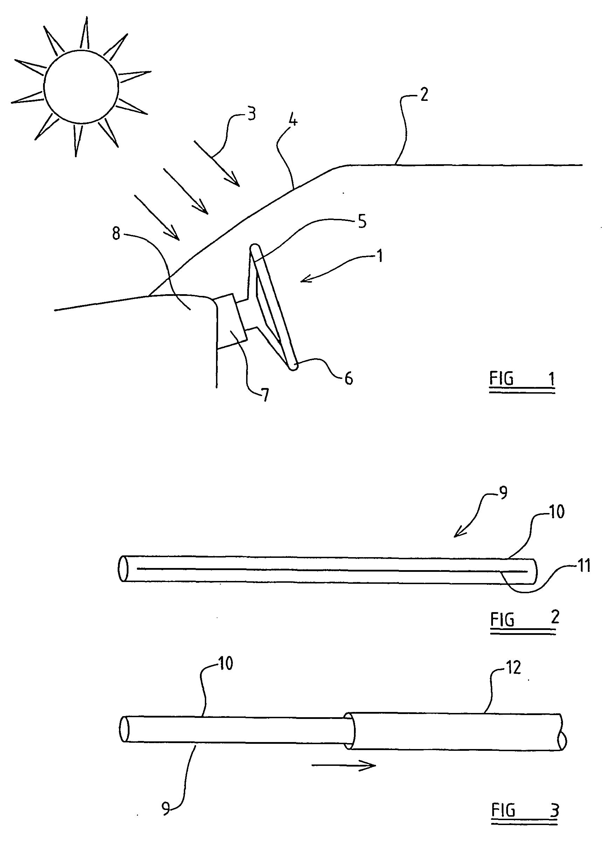

Referring n ow to Figure 1, there is illustrated, in schematic form, the steering wheel 1 of a motor vehicle 2. The motor vehicle 2 is shown in a parked condition in which it is being subjected to bright sunshine. It will therefore be appreciated that the radiant energy of the sunshine (indicated schematically at 3), may be directed through the windscreen or windshield 4 of the motor vehicle 2, such that it will heat the upper-most region 5 of the steering wheel 1. As will be clear from Figure 1, the lower region 6 of the steering wheel 1 is shielded from direct heating by the sunshine 3 by other regions of the steering wheel and/or parts of the steering column 7 and dashboard 8 of the motor vehicle. The resultant effect of the situation illustrated in Figure 1 on a conventional steering wheel is therefore that the upper region 5 of the steering wheel can become raised to a very high temperature by the sun, whilst the lower region 6 of a steering wheel remains at a more comfortable temperature for a person handling the steering wheel. It is therefore desirable to seek to reduce the temperature of the upper region 5 of the steering wheel, towards that of the lower region 6 of the steering wheel.

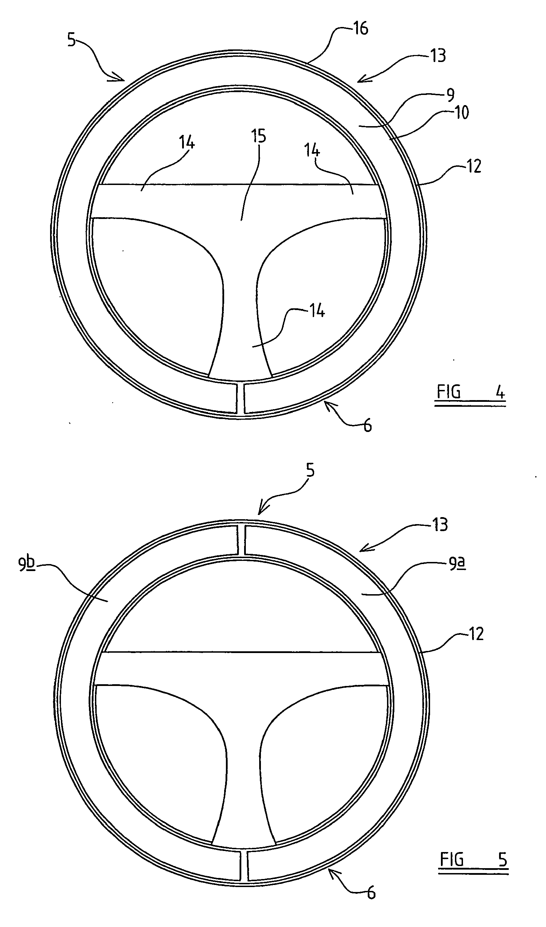

Figure 2 illustrates a substantially straight heat pipe 9 suitable for use in a steering wheel according to the present invention. The heat pipe 9 comprises an initially straight length of tubing 10, which preferably is a length of copper tubing having good levels of thermal conductivity. The copper tubing 10 is provided inside with a wick structure 11, and a small volume of volatile fluid such as water, acetone, ethanol or methanol. However, for use in the present invention, it is preferred to use water within the copper tubing 10. The wick 11 preferably runs substantially the entire length of the copper tubing 10 and can, as is conventional, be mounted on the inner wall of the copper tube 10. The copper tube 10 is evacuated so as to have an internal pressure substantially below atmospheric pressure, and the two ends of the tube 10 are sealed, to maintain these internal pressure conditions.

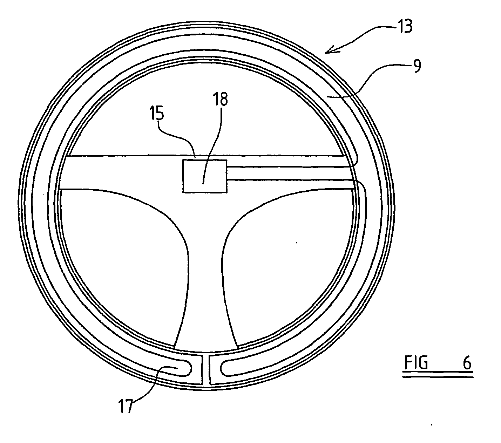

Figure 3 illustrates the copper tubing 10 of the heat pipe 9 being inserted axially into another length of tubing 12 which has a slightly greater diameter than the copper tubing 10. The length of tubing 12 preferably takes the form of a length of steel or aluminium tubing. Steel or aluminium is preferred because these materials are substantially more rigid than copper and are therefore more suitable to form the outer rim of a motor vehicle steering wheel.

When the heat pipe 9 has been fully inserted into the length of tubing 12, the resulting structure is then heated in an oven in order to connect the two lengths of tubing 10, 12 together. When the two lengths of tubing 10, 12 are heated together in this way, the copper tubing 10 expands to a greater degree than the outer steel or aluminium tubing 12, and so therefore the outer surface of the copper tubing 10 will be urged intimately against the inner surface of the steel or aluminium tubing 12. Heating in this way is continued until the copper tubing 10 and/or the steel or aluminium tubing 12 is mechanically deformed such that the two lengths of tubing become connected to one another. The mechanical connection between the two lengths of tubing 10, 12 in this way can be improved if the outer surface of the copper tubing 10 is scratched or otherwise abraded prior to the heating step.

After the two lengths of tubing 10, 12 have been connected to one another as described above, the resulting length of pipe is then bent so as to define an appropriate shape for the rim of a steering wheel. For example, as illustrated in Figure 4, the co-axial and interconnected lengths of tubing 10, 12 have been bent into a substantially circular configuration to define a substantially circular rim 13 to the steering wheel. The two ends of the outer steel or aluminium tubing 12 have been connected to one another in the lowermost region 6 of the steering wheel, such that the two ends of the heat pipe 9 defined by the copper tubing 10 are located substantially adjacent one another in the lower region 6 of the steering wheel. When the coaxial lengths of tubing 10, 12 have been deformed as described above so as to define the rim 13 of the steering wheel, the resulting rim 13 is then connected, for example by crimping, welding or other convenient fastening method, to die-casted spokes 14 of the steering wheel, the spokes 14 extending from the rim 13 to a central hub 15. It is preferred for the structure of the spokes 14 and the hub 15 to comprise principally aluminium or magnesium material.

A soft resilient layer of plastic or foam 16 is then provided over the rim 13 and parts of the spokes 14, the plastic or foam being selected so as to have a relatively high level of thermal conductivity. Finally, to provide a tactile and aesthetically pleasing outer covering to the steering wheel, a leather or plastic sheet is applied to the outside of the plastic or foam 16.

It should therefore be appreciated that the above-described steering wheel structure illustrated in Figure 4 is such that the heat pipe 9 is provided within the peripheral rim 13 of the steering wheel, but that the heat pipe 9 is completely self-contained in a sense that it is thermally isolated from any external cooling arrangement such as, for example, a heat exchanger which has been proposed previously in prior art arrangements. The heat pipe 9 will therefore be understood to be configured to transfer heat from the upper region 5 of the steering wheel towards the lower region 6 of a steering wheel in the event that the upper region 5 becomes heated above the temperature of the lower region 6, for example as a result of radiant energy from the sun. Any liquid within the heat pipe 9 in the upper region of the steering wheel 5 will vaporise upon heating the upper region of a steering wheel 5 and so will move, in a gaseous phase, towards the two ends of the heat pipe 9 which are both located in the lower region 6 of a steering wheel. The liquid vapour thus becomes cooled in the lower region 6 of a steering wheel and so condenses back into a liquid phase. The liquid is then transported by the wicking action of the wick provided in the heat pipe 9, back up to the heated region 5 of the steering wheel. The effect of this is that the upper region 5 of the steering wheel becomes cooled and the heat resulting from the exposure of a steering wheel to the sunshine is spread more evenly throughout the rim 13 of the steering wheel. It has been found in tests that in conditions in which the upper region of a conventional steering wheel rim reached 90°C, the above-described arrangement of the present invention only reached a temperature of approximately 70° in the upper region of a steering wheel, which is much safer for a person driving a motor vehicle to touch.

Whilst the present invention has been described above with reference to a particular embodiment, it should be appreciated that certain modifications and variations can be made, without departing from the scope of the present invention as defined by the claims. For example, Figure 5 illustrates another possible embodiment of the present invention, in which the rim 13 of the steering wheel is provided with two substantially semi-circular heat pipes 9A, 9B, both of which are provided within the outer aluminium or steel tubing 12. One of the heat pipes 9A extends from a position located in the upper region 5 of the steering wheel to a position located in the lower region 6 of a steering wheel, and lies to the right-hand side of the steering wheel as illustrated. The other heat pipe 9B similarly extends from the upper region 5 of the steering wheel to the lower region 6 of the steering wheel, but extends around the left-hand part of the rim 13. Each of these heat pipes 9A, 9B serves the same function as the single heat pipe 9 of the previously described embodiment illustrated in Figure 4. The two heat pipes 9A, 9B can be thermally connected to one another at their respective ends and could, in an alternate configuration, be configured such that one of the heat pipes extends around the upper half of the rim 13, with the other heat pipe extending around the lower part of the rim 13.

Figure 6 illustrates another possible embodiment of the present invention, in which the arrangement described above and illustrated in Figure 4 is provided with an external heat source. In this arrangement, a length of heating wire or element 17 is provided within the heat pipe 9, and extends throughout substantially the entire extent of the heat pipe 9, following a tortuous path, and being electrically connected to a heating control unit 18, which may be located within the hub 15 of a steering wheel, but could also be located elsewhere within the motor vehicle. The heating wire 17, when energised by the control unit 18 serves to heat the rim 13 of the steering wheel. In such an arrangement, cooling of the steering wheel (with the heater switched off) in the event that the upper part of the steering wheel becomes excessively heated in sunshine, is effected through the sole operation of the heat pipe 9 in the manner described above. However, in cold conditions, the external heat source can be switched on in order to heat the rim of the steering wheel.

It should be appreciated that in each of the above-described arrangements, the steering wheel is only provided with heat pipes within its rim 13.

In the present Specification "comprises" means "includes or consists of" and "comprising" means "including or consisting of".

## Claims

1. A steering wheel (1) having a central hub (15) connected by at least one spoke (14) to a rim (13), and means within said rim for cooling or heating a region thereof, **characterised in that** said means comprises at least one heat pipe (9) the or each said heat pipe being thermally isolated from any external cooling arrangement and being configured to transfer heat from a first region of the rim (13) to another region of the rim (13) solely under its own function, the or each heat pipe comprising an elongate metal tube containing an elongate wick (11) extending from one end of the tube to the other, the tube containing a volatile liquid.

2. A steering wheel according to Claim 1, wherein the rim (13) comprises a single said heat pipe (9) extending around substantially the entire extent of the rim (13).

3. A steering wheel according to Claim 2, wherein the heat pipe (9) has a substantially circular configuration.

4. A steering wheel according to Claim 1, wherein the rim (13) comprises two said heat pipes (9a,9b), each said heat pipe (9a,9b) extending around approximately half of the extent of the rim (13).

5. A steering wheel according to Claim 4, wherein each said heat pipe (9a,9b) has a substantially semi-circular configuration.

6. A steering wheel according to Claim 4 or 5, wherein the two heat pipes (9a,9b) are thermally connected to one another.

7. A steering wheel according to any preceding Claim, wherein the or each said heat pipe (9) is provided with or connected to a heater.

8. A steering wheel according to Claim 7, wherein the or each heat pipe (9) comprises a heating element (17).

9. A steering wheel according to any preceding Claim having heat pipes (9) located only in the rim (13).

## Patentansprüche

1. Lenkrad (1) mit einer zentralen Nabe (15), die durch mindestens eine Speiche (14) mit einem Kranz (13) verbunden ist, und mit in dem Kranz angeordneten Mitteln zum Kühlen oder Heizen eines seiner Bereiche, **dadurch gekennzeichnet, dass** die Mittel mindestens ein Wärmeleitohr (9) umfassen, wobei das oder jedes Wärmeleitrohr von jeder externen Kühlanordnung wärmeisoliert und so konfiguriert ist, dass sie Wärme von einem ersten Bereich des Kranzes (13) zu einem anderen Bereich des Kranzes (13) übertragen, ausschließlich in seiner eigenen Funktion, wobei das oder Jedes Wärmeleitrohr eine längere Metallröhre umfasst, die einen längeren Docht (11) enthält, der sich von einem Ende der Röhre zum anderen erstreckt, wobei die Röhre eine flüchtige Flüssigkeit. enthält.

2. Lenkrad nach Anspruch 1, bei welchem der Kranz (13) ein einzelnes sich im Wesentlichen um den gesamten Umfang des Kranzes (13) erstreckendes Wärmeleitrohr (9) umfasst.

3. Lenkrad nach Anspruch 2, bei welchem das Wärmeleitrohr (9) im Wesentlichen eine kreisförmige Konfiguration aufweist.

4. Lenkrad nach Anspruch 1, bei welchem der Kranz (13) zwei Wärmeleitrohre (9a, 9b) umfasst, wovon sich jedes Wärmeleitrohr (9a, 9b) etwa über den halben Umfang des Kranzes (13) erstreckt.

5. Lenkrad nach Anspruch 4, bel welchem jedes Wärmeleitrohr (9a,9b) Im Wesentlichen eine hälbkreisförmige Konfiguration aufweist.

6. Lenkrad nach Anspruch 4 oder 5, bei welchem die zwei Wärmeleitrohre (9a, 9b) wärmeleitend miteinander verbunden sind.

7. Lenkrad nach einem der vorhergehenden Ansprüche, bei welchem das oder jedes Wärmeleitrohr (9) mit einer Heizeinrichtung versehen oder verbunden ist.

8. Lenkrad nach Anspruch 7, bei welchem das oder jedes Wärmeleitrohr (9) ein Heizelement (17) umfasst.

9. Lenkrad nach einem der vorhergehenden Ansprüche, bei welchem Wärmeleitrohre (9) nur in dem Kranz (13) angeordnet sind.

## Revendications

1. Volant (1) ayant un moyeu central (15) raccordé par au moins un rayon (14) à un pourtour (13), et des moyens à l'intérieur dudit pourtour pour refroidir ou chauffer sa région, **caractérisé en ce que** lesdits moyens comprennent au moins un tuyau de chauffage (9), le ou chacun desdits tuyaux de chauffage étant thermiquement isolés de l'un quelconque des agencements de refroidissement externes et étant configurés pour transférer la chaleur d'une première région du pourtour (13) à une autre région du pourtour (13) uniquement sous l'action de sa propre fonction, le ou chaque tuyau de chauffage comprenant un tube métallique allongé contenant une mèche allongée (11) s'étendant à partir d'une extrémité du tube à l'autre, le tube contenant un liquide volatil.

2. Volant selon la revendication 1, dans lequel le pourtour (13) comprend un seul tuyau de chauffage (9) s'étendant sensiblement autour de toute l'étendue du pourtour (13).

3. Volant selon la revendication 2, dans lequel le tuyau de chauffage (9) a une configuration sensiblement circulaire.

4. Volant selon la revendication 1, dans lequel le pourtour (13) comprend deux desdits tuyaux de chauffage (9a, 9b), chacun desdits tuyaux de chauffage (9a, 9b) s'étendant approximativement autour de la moitié de l'étendue du pourtour (13).

5. volant selon la revendication 4, dans lequel chacun desdits tuyaux de chauffage (9a, 9b) a une configuration sensiblement semi-circulaire.

6. Volant selon la revendication 4 ou 5, dans lequel les deux tuyaux de chauffage (9a, 9b) sont raccordés thermiquement entre eux.

7. Volant selon l'une quelconque des revendications précédentes, dans lequel le ou chaque tuyau de chauffage (9) est doté de ou raccordé à un dispositif de chauffage.

8. Volant selon la revendication 7, dans lequel le ou chaque tuyau de chauffage (9) comprend un élément chauffant (17).

9. Volant selon l'une quelconque des revendications précédentes, ayant des tuyaux de chauffage (9) situés uniquement dans le pourtour (13).
